# EUROPÄISCHE PATENTSCHRIFT

(11) **EP 0 571 867 B1**
(45) Veröffentlichungstag und Bekanntmachung des Hinweises auf die Patenterteilung: **31.07.1996**
(21) Anmeldenummer: 93108041.0
(22) Anmeldetag: 17.05.1993
(51) Int. Cl.: C09D 11/10, D06P 1/54

(54) **Vernetzer für Textildruck-Bindemittel**
Crosslinkers for textile printing binders
Agents de réticulation pour liants d'impression textile

(30) Priorität: 29.05.1992 DE 4217716
(43) Veröffentlichungstag der Anmeldung: 01.12.1993
(73) Patentinhaber: BAYER AG, 51368 Leverkusen (DE)
(72) Erfinder: Träubel, Harro, Dr., W-5090 Leverkusen (DE); Wigger, Herbert, Dipl.-Ing., W-5090 Leverkusen (DE); Laas, Hans-Josef, Dr., W-5000 Köln 80 (DE); Reiff, Helmut, Dr., W-5090 Leverkusen (DE)

(56) Entgegenhaltungen:
- DE-A- 3 512 918
- DATABASE WPIL, Nr. 87-324 984, DERWENT PUBLICATIONS LTD., London, GB ; & JP-A-62 231 787
- DATABASE WPIL, Nr. 92-068 177, DERWENT PUBLICATIONS LTD., London, GB ; & JP-A-04 011 084
- DATABASE WPIL, Nr. 82-45 491 DERWENT PUBLICATIONS LTD., London, GB

## Beschreibung

Die vorliegende Erfindung betrifft die Verwendung von modifizierten Polyisocyanaten als Vernetzer für in Textildruckpasten verwendete Bindemittel.

In der Textildruckindustrie ist die Verwendung von fremdvernetzbaren filmbildenden Bindemitteln, z.B. solchen auf Polyacrylat- oder Butadien/Acrylnitril-Copolymerisat-Basis, weit verbreitet. Die Mischungen aus Bindemittel und Pigment enthalten üblicherweise zusätzlich reaktive Verbindungen, die nach dem Druckvorgang das Bindemittel bei höherer Temperatur vernetzen und dadurch den Druck fixieren können. Erst diese Fixierung führt zur gewünschten Wasserechtheit, die z.B. beim Waschen der bedruckten Textilien wichtig ist.

Als Vernetzer für die in Textildruckpasten verwendeten Bindemitteln werden in der Praxis immer noch Melamin/Formaldehyd-Kondensationsprodukte eingesetzt, die erst oberhalb von etwa 120°C Vernetzungsreaktionen eingehen. Gemäß W. Berlenbach in Ullmanns Encyklopädie der technischen Chemie, 4. Aufl., Bd. 22, S. 629, Verlag Chemie, Weinheim 1982 wird die Vernetzung über N-Methylolgruppen des Bindemittels durch Säure katalysiert; man fixiert am besten mit trockener Heißluft mit Einwirkungszeiten von beispielsweise 5 bis 10 Minuten/140°C oder 30 bis 60 Sekunden/175° C.

In der DE-OS 35 29 530 werden Textildruckpasten vorgeschlagen, die in Wasser oder in organischen Lösungsmitteln dispergierte fremdvernetzbare Bindemittel und "desaktivierte", d.h. teilblockierte Polyisocyanate als Vernetzer enthalten.

Die DE-OS 31 09 978 beschreibt wäßrige Textildruckpasten, die filmbildende fremdvernetzbare Polymerisate als Bindemittel und NCO-Präpolymerisate als Vernetzer enthalten, wobei diese Präpolymerisate - verglichen mit niedermolekularen Polyisocyanaten - aufgrund ihrer höheren Molekulargewichte und ihres geringeren Gehalts an reaktiven Gruppen - den Druckpasten scheinbar eine höhere Topfzeit verleihen.

Aus der DE-OS 38 36 030 sind Beschichtungsmassen bekannt, die sich zur Herstellung wasserdampfdurchlässiger Textil- und Lederbeschichtungen nach der Methode der Verdampfungskoagulation eignen. Diese Beschichtungsmassen enthalten neben Verdickern Carboxylat- und/oder Sulfonat- und/oder Polyethylenoxid-modifixierte (und dadurch "hydrophilierte") Polyurethane in wäßriger Dispersion, hochsiedende organische Lösungsmittel als Nichtlöser für die in Wasser dispergierten Polyurethane, NCO-gruppenfreie Vernetzer und hydrophile Polyisocyanate als Haftvermittler zum Substrat und als Vernetzer für die dispergierten Polyurethane. Der Nichtlöser hinterläßt bei dieser Verdampfung Mikroporen im hinterbleibenden Polyurethanfilm und gewährleistet so die gewünschte Wasserdampfdurchlässigkeit der Beschichtung.

Die DE-OS 35 12 918 betrifft hydrophile Carbodiimidgruppen aufweisende Isocyanatderivate und ihre Verwendung als Vernetzer für in wäßriger Lösung oder Dispersion vorliegende Kunststoffe, die sich u.a. zur Textilbeschichtung eignen sollen. Druckpasten werden nicht erwähnt.

Die GB-PS 962 109 betrifft Überzugsmittel auf Basis spezieller Copolymerisate, die mit Diepoxiden vernetzt werden. Sie können auch für die Herstellung von Druckpasten eingesetzt werden. Diese entsprechen allerdings nicht allen Anforderungen bezüglich der Reaktivität und der erreichbaren Echtheiten der damit erzeugten Drucke.

Die beschriebenen Textildruckpasten des Standes der Technik sind mit verschiedenen Nachteilen behaftet: Entweder wird bei der Vernetzungsreaktion und - besonders unerwünscht - auch noch später beim Gebrauch der bedruckten Textilien Formaldeyhd abgegeben oder die Zahl der für die Vernetzung zur Verfügung stehenden reaktiven Gruppen läßt sich schwer steuern oder der Vernetzer ist nur mit Mühe dispergierbar. Auch ergeben die Druckpasten des Standes der Technik bei einer Wärmebehandlung unter 100°C in der Regel keine zufriedenstellenden Echtheiten mehr. Aufgabe der Erfindung war es daher, Textildruckpasten bereitzustellen, die diese Nachteile nicht besitzen.

Überraschenderweise wurde gefunden, daß diese Aufgabe durch Verwendung spezieller Gemische hydrophilierter Polyisocyanate gelöst werden kann.

Gegenstand der Erfindung ist also die Verwendung von I. Polyisocyanatgemischen mit
a) einer mittleren NCO-Funktionalität von 1,8 bis 4,2,
b) einem Gehalt an (cyclo)aliphatisch gebundenen Isocyanatgruppen (berechnet als NCO, Molekulargewicht = 42) von 12,0 bis 21,5 Gew.-% und vorzugsweise
c) einem Gehalt an innerhalb von Polyetherketten angeordneten Ethylenoxideinheiten (berechnet als C₂H₄O, Molekulargewicht = 44) von 2 bis 20 Gew.-%, wobei die Polyetherketten im statistischen Mittel von 5 bis 70 Ethylenoxideinheiten aufweisen,

als Vernetzer für in Textildruckpasten verwendete Bindemittel.

Die erfindungsgemäß zu verwendenden Polyisocyanatgemische besitzen im allgemeinen eine Viskosität von 50 bis 10 000 mPa.s bei 23°C.

Die Herstellung dieser Polyisocyanatgemische kann auf an sich bekannte Weise durch Umsetzung einer Polyisocyanatkomponente A) mit einer (mittleren) NCO-Funktionalität von 2,1 bis 4,4, vorzugsweise 2,3 bis 4,3, bestehend aus mindestens einem Polyisocyanat mit ausschließlich (cyclo)aliphatisch gebundenen Isocyanatgruppen mit einem ein- oder mehrwertigen, im statistischen Mittel von 5 bis 70 Ethylenoxideinheiten aufweisenden Polyalkylenoxidpolyetheralkohol B) unter Einhaltung eines NCO/OH-Äquivalentverhältnisses von mindestens 2:1, im allgemeinen von 4:1 bis ca. 100:1 erfolgen, wobei im übrigen Art und Mengenverhältnisse der genannten Ausgangskomponenten so gewählt werden, daß die resultierenden Umsetzungsprodukte den oben unter a) bis c) genannten Bedingungen entsprechen.

Die Polyisocyanatkomponente A) umfaßt beliebige, durch Modifizierung einfacher (cyclo)aliphatischer Diisocyanate hergestellte Polyisocyanate mit Uretdion- und/oder Isocyanurat-, Urethan- undloder Allophanat-, Biuret- oder Oxadiazinstruktur, wie sie beispielsweise in den DE-OS 1 670 666, 3 700 209 und 3 900 053 oder den EP-A 336 205 und 339 396 beschrieben sind. Besonders bevorzugt sind solche Polyisocyanatkomponenten A), die weniger als 1, vorzugsweise weniger als 0,5 Gew.-% monomeres Isocyanat enthalten.

Geeignete Diisocyanate zur Herstellung solcher Polyisocyanate sind grundsätzlich solche des Molekulargewichtsbereichs 140 bis 400 mit (cyclo)aliphatisch gebundenen Isocyanatgruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat) und 4,4'-Diisocyanatodicyclohexylmethan oder beliebige Gemische solcher Diisocyanate.

Bevorzugt handelt es sich bei der Polyisocyanatkomponente A) um im wesentlichen aus trimerem 1,6-Diisocyanatohexan und gegebenenfalls dimerem 1,6-Diisocyanatohexan bestehenden Isocyanuratgruppen und gegebenenfalls Uretdiongruppen aufweisende Polyisocyanatgemische mit einem NCO-Gehalt von 19 bis 24 Gew.-%. Besonders bevorzugt werden als Komponente A) die entsprechenden, weitgehend Uretdiongruppen-freien, Isocyanuratgruppen aufweisenden Polyisocyanate des genannten NCO-Gehalts eingesetzt, wie sie durch an sich bekannte, katalytische Trimerisierung und unter Isocyanuratbildung von 1,6-Diisocyanatohexan erhalten werden und die vorzugsweise eine (mittlere) NCO-Funktionalität von 3,2 bis 4,2 aufweisen.

Bei der Komponente B) handelt es sich um ein- oder mehrwertige im statistischen Mittel 5 bis 70, vorzugsweise 6 bis 60 Ethylenoxideinheiten pro Molekül aufweisende Polyalkylenoxidpolyetheralkohole, wie sie in an sich bekannter Weise durch Alkoxylierung geeigneter Startermoleküle zugänglich sind.

Zur Herstellung der Polyetheralkohole B) können beliebige ein- oder mehrwertige Alkohole des Molekulargewichtsbereichs 32 bis 150, wie sie beispielsweise auch gemäß EP-A 206 059 Verwendung finden, als Startermoleküle eingesetzt werden. Bevorzugt werden als Startermoleküle monofunktionelle aliphatische Alkohole mit 1 bis 4 Kohlenstoffatomen verwendet. Besonders bevorzugt ist die Verwendung von Methanol, Ethanol, Propanol und Butanol.

Für die Alkoxylierungsreaktion geeignete Alkylenoxide sind insbesondere Ethylenoxid und Propylenoxid; die in beliebiger Reihenfolge oder auch im Gemisch bei der Alkoxylierungsreaktion eingesetzt werden können.

Bei den Polyalkylenoxidpolyetheralkoholen B) handelt es sich entweder um reine Polyethylenoxidpolyether oder um gemischte Polyalkylenoxidpolyether, die mindestens eine, mindestens 5, im allgemeinen 5 bis 70, vorzugsweise 6 bis 60 und besonders bevorzugt 7 bis 20 Ethylenoxideinheiten aufweisende Polyetherkette enthalten und deren Alkylenoxideinheiten zu mindestens 60 Mol-%, vorzugsweise zu mindestens 70 Mol-% aus Ethylenoxideinheiten bestehen.

Bevorzugte Polyetheralkohole B) zur Herstellung der erfindungsgemäß zu verwendenden Polyisocyanatgemische sind monofunktionelle, auf einem aliphatischen, 1 bis 4 Kohlenstoffatome aufweisenden Alkohol gestartete Polyalkylenoxidpolyether, die im statistischen Mittel 6 bis 60 Ethylenoxideinheiten enthalten. Besonders bevorzugte Polyetheralkohole B) sind reine Polyethylenglykolmonomethyletheralkohole, die im statistischen Mittel 7 bis 20 Ethylenoxideinheiten aufweisen.

Anstelle der beschriebenen, bevorzugten nichtionischhydrophil modifizierten Polyisocyanate können als Komponente b) oder als Teil der Komponente b) auch unmodifizierte Polyisocyanate der oben als Komponente A) beispielhaft genannten Art verwendet werden; vorausgesetzt, die Polyisocyanate werden in Kombination mit geeigneten Emulgatoren, beispielsweise solchen, wie sie z.B. in der EP-A 0 013 112 zur Hydrophilierung aromatischer Polyisocyanate beschrieben sind, eingesetzt.

Als Bindemittel, die mit den erfindungsgemäß zu verwendenden Polyisocyanatgemischen vernetzt werden können; eignen sich beispielsweise Polymerisate wie solche auf Basis von natürlichem oder synthetischem Kautschuk, Styrol/Butadien-Copolymerisaten, Polymerisaten des 2-Chlor-butadiens, Styrol/Acrylnitril-Copolymerisaten, Polyethylen, chlorsulfoniertem oder chloriertem Polyethylen, Butadien/Acrylnitril-Copolymerisaten, Butadien/Methacrylat-Copolymerisaten, Polyacrylsäureestern, PVC oder gegebenenfalls partiell verseiften Ethylen/Vinylacetat-Copolymerisaten oder Polyadditionsverbindungen wie solche auf Polyurethanbasis - also Produkte, wie sie beispielsweise in Ullmanns Encyklopädie der technischen Chemie, 4. Aufl., Bd. 16, Verlag Chemie, Weinheim-New York 1978, S. 159 ff und in den dort beschriebenen Literaturstellen oder in den DE-OS 19 53 345, 19 53 348, 19 53 349 oder in der US-PS 2 939 013 beschrieben worden sind.

Pro 100 Gew.-Teile Bindemittel werden im allgemeinen 1 bis 25, vorzugsweise 2,5 bis 12,5 des erfindungsgemäß zu verwendenden Vernetzers eingesetzt. Dabei wird vorausgesetzt, daß die Bindemittel mindestens so viele NCO-reaktive Gruppen (vorzugsweise Hydroxylgruppen) enthalten, daß die Isocyanatgruppen des zugesetzten Vernetzers I spätestens beim Fixieren vollständig abreagieren können.

Da NCO-funktionelle Vernetzer neben Hydroxylgruppen mit allen möglichen Zerewittinoff-aktiven H-Atomen abzureagieren vermögen, ist es nicht erforderlich, daß die den Bindemitteln zugrundeliegenden Polymeren Hydroxylgruppen aufweisen. Auch Carboxyl-, Urethan-, Harnstoff-, Amin-, Amidgruppen etc. (s. Saunders-Frisch, "Polyurethanes" Part 1, Interscience Publ., New York 1962, S. 63 ff) sind einer Vernetzungsreaktion zugänglich. Bei der Vernetzung ist es generell nicht erforderlich - oft sogar nicht wünschenswert -alle der Vernetzung zugänglichen Gruppen mit Isocyanaten abreagieren zu lassen. Die Vernetzungswirkung wird im allgemeinen lediglich phänomenologisch festgelegt: Die Erreichung einer gewissen Wasserunempfindlichkeit, Abriebfestigkeit etc. ohne zu starke Beeinträchtigung der elastischen Eigenschaften wird im allgemeinen mit den angegebenen 1 bis 25 Gewichtsteilen Vernetzer pro 100 Gewichtsteile Bindemittel erreicht.

Die für die Druckpasten zu verwendenden Bindemittel sind vorzugsweise frei von Perfluoralkylgruppen.

Die für die Textildruckpasten geeigneten Pigmente unterliegen praktisch keiner Beschränkung; sie können anorganischer oder organischer Natur sein. Geeignete organische Pigmente sind z.B. solche der Azo-, Anthrachinon-, Azoporphin-, Thioindigo-, Kupfer- (gegebenenfalls halogenierte) Phthalocyanin-, Dioxazin-, Naphthalintetracarbonsäure- oder Perylentetracarbonsaurereihe sowie verlackte Farbstoffe wie Calcium-, Magnesium- oder Aluminiumlacke von Sulfonsäure- und/oder Carbonsäuregruppen enthaltenden Farbstoffen, von denen eine große Zahl beispielsweise aus Colour-Index, 2. Auflage bekannt ist. Geeignete anorganische Pigmente sind z.B. Zinksulfide, Titandioxide, Ultramarine, Eisenoxide, Nickel- und Chromverbindungen, Ruße, Siliciumdioxide und Aluminiumoxide.

Die Menge Pigment, bezogen auf die Summe Bindemittel + Vernetzer + Pigment, in den Textildruckpasten beträgt in der Regel 0,5 bis 50, vorzugsweise 5 bis 35 Gew.-%, bezogen auf die Summe von Bindemittel, Vernetzer und Pigment.

Die Bindemittel und Vernetzer können, wie üblich, in Wasser dispergiert werden, gegebenenfalls unter Verwendung organischer Lösungsmittel (so z.B. im sog. "Benzin-Emulsionsverfahren", wonach Öl-in-Wasser-Emulsionen entstehen). Aus Gründen der Umweltverträglichkeit wird allerdings die Verwendung benzinfreier Druckpasten bevorzugt. Beim Aufstellen der Rezeptur wird man zweckmäßigerweise auf Komponenten mit reaktiven Gruppen, die die Reaktion zwischen Bindemittel und Vernetzer stören könnten, verzichten.

Zur Herstellung der Druckpasten können selbstverständlich weitere Hilfsmittel, wie z.B. Emulgatoren, Verdicker, Verdunstungshemmer, Katalysatoren, Griffverbesserer, Antischaummittel, eingesetzt werden.

Für die Verarbeitung der Textildruckpasten eignen sich die üblichen Methoden der Drucktechnik; vgl. z.B. Ullmanns Encyclopädie der technischen Chemie, 4. Aufl., Bd. 22, S. 565 ff. "Textildruck", Verlag Chemie, Weinheim 1982.

Die aufgebrachten Drucke können bei erhöhten Temperaturen vernetzt werden, wobei die erfindungsgemäß zu verwendenden Vernetzer die Anwendung relativ niedriger Temperaturen (z.B. 80 bis 100°C) gestatten, wobei jedoch auch höhere Temperaturen von bis zu 170°C nicht schädlich sind. Mit Härtungsbedingungen von 80 bis 100°C/1 bis 10 Minuten können jedoch in den meisten Fällen ausgezeichnete Ergebnisse erzielt werden. Auch durch Trocknen bei Raumtemperatur über längere Zeit (1 bis 3 Tage) kann die Endfestigkeit erreicht werden.

Nach einer besonderen Ausführungsform können die Vernetzer mit Bindemittel und Pigmente für das Färben von Textilien in wäßrigem Medium eingesetzt werden. Durch die Verwendung der hydrophilierten Isocyanate als Vernetzer wird u.a. die Naß- und Trockenreibfestigkeit verbessert.

Die Prozentangaben in den nachfolgenden Beispielen beziehen sich jeweils auf das Gewicht; Teile sind Gewichtsteile.

### Beispiele

Folgende Komponenten wurden verwendet:

Acrylatbinder: 40 %ige wäßrige Dispersion eines Acrylnitril/Butylacrylat/Styrol/Acrylsäure-Emulsionscopolymerisats (4:83:8:3 Teile)

Polyurethanbinder: 40 %ige wäßrige Dispersion eines Polyurethans (Sulfonatgruppen-haltiges Polyesterurethan auf Basis Hexamethylendiisocyanat; ®Acramin PUD, Bayer AG)

Verdickerlösung: 4 %ige wäßrige Lösung eines Cellulose-derivats (®Natrosol MR, Hercules Powder)

Emulgator L: 42 %ige wäßrige Emulgatorlösung (®Emulgator L, Bayer AG)

Emulgator VA: 46 %ige wäßrige Emulgatorlösung (®Emulgator VA, Bayer AG)

Emulgator WN: 90 %ige wäßrige Lösung eines auf einer phenolischen Komponente gestarteten Ethylenoxid-Polyethers mit einem mittleren Molekulargewicht von etwa 900 (®Emulgator WN, Bayer AG)

Acrylsäure/Acrylamid-Copolymerisatdispersion: 29 %ige Dispersion des Ammoniumsalzes eines schwach vernetzten Acrylsäure/Acrylamid-Copolymerisats in einem isoparaffinischen Kohlenwasserstoff (®Acraconz BN, Bayer AG)

®Acramin Marine Blau FBC: wäßrige Pigmentformierung auf Basis von Cu-Phthalocyanin, Bayer AG und Oxazin (P.V.23)

®Solvesso 100: aromatische Kohlenwasserstoffmischung (Kp. 163-181°C) der Esso Chemie, Köln,

### Melamin/Formaldehyd-Kondensat: ®Acrafix MF, Bayer AG

### Polyisocyanat 1

Zu 500 g 1,6-Diisocyanatohexan-Trimerisat, welches im wesentlichen aus Tris-(6-isocyanatohexyl)-isocyanurat und dessen höheren Homologen besteht (NCO-Gehalt 21,6 %, mittlere NCO-Funktionalität 3,3, Gehalt an monomerem Diisocyanat: unter 0,3 %, Viskosität 1700 mPa.s/23°C), wurden unter Rühren 40 g eines auf 3-Ethyl-3-hydroxymethyloxethan gestarteten monofunktionellen Ethylenoxid-Polyethers vom Molekulargewicht 1210 gegeben. Nach 2 Stunden Rühren bei 100°C erhielt man eine Polyisocyanurat-Zubereitung mit einem NCO-Gehalt von 19,7 Gew.-% und einer Viskosität von 3200 mPa.s/23°C. Diese Zubereitung entspricht der Zusammensetzung des Beispiels 3 der EP-A 206 059.

### Polyisocyanat 2

Zu 1000 g 1,6-Diisocyanatohexan-Trimerisat, welches im wesentlichen aus Tris-(6-isocyanatohexyl)-isocyanurat und dessen höheren Homologen besteht (NCO-Gehalt 21,6 %, mittlere Funktionalität 3,3, Gehalt an monomerem Diisocyanat: unter 0,3 %, Viskosität 1700 mPa.s/23°C), wurden unter Rühren 80,8 g eines auf 50°C erwärmten auf n-Butanol gestarteten monofunktionellen Ethylenoxid-Polyethers vom Molekulargewicht 1145 gegeben. Nach 2,5-stündigem Rühren bei 110°C erhielt man ein klares Harz mit einem NCO-Gehalt von 18,4 % und einer Viskosität von 2500 mPa.s/23°C.

### Polyisocyanat 3

1,0 Val eines Isocyanuratgruppen-haltigen Polyisocyanates auf Basis von 1,6-Diisocyanatohexan mit einem NCO-Gehalt von 21,5 %, einer mittleren NCO-Funktionalität von ca. 3,8 und einer Viskosität von 3000 mPa.s (23°C) wurde bei Raumtemperatur unter Rühren mit 0,08 Val eines auf Methanol gestarteten, monofunktionellen Ethylenoxid-Polyethers mit einem mittleren Molekulargewicht von 350 versetzt und anschließend für 3 h auf 100°C erwärmt. Nach Abkühlen auf Raumtemperatur lag ein praktisch farbloses klares Polyisocyanatgemisch vor. Der NCO-Gehalt betrug 17,3 %, der Gehalt an Ethylenoxideinheiten 11,3 % und die Viskosität 3050 mPa.s (23°C).

### Polyisocyanat 4

1000 g des Isocyanurats des Isophorondiisocyanats, das 50 %ig in einer Lösungsmittelmischung (Methoxypropylacetat/®SOLVESSO 100 1.6:1 Gewichtsteile) vorliegt, wurde analog Polyisocyanat 1 mit 50 g 3-Ethyl-2-hydroxymethyl-oxethan-polyglykolether des Molekulargewichts 1210 zu einem hydrophilierten Isocyanat vom Isocyanatgehalt 6,1 % umgesetzt.

### Vergleich 1: Öl-in-Wasser-Emulsionsdruck

Aus 225 g Wasser, 40 g Verdickerlösung, 25 g einer 33 %igen wäßrigen Lösung von Diammoniumphosphat, 10 g Emulgator L und 700 g Testbenzin wurde eine Emulsion hergestellt, 840 g dieser Emulsion wurden dann mit 120 g Acrylatbinder, 30 g ®Acramin Blau FBC und 10 g Melamin/Formaldehyd-Kondensat versetzt. Mit der erhaltenen Druckpaste wurden ein Baumwollgewebe und ein Baumwall/Polyester-Gewebe bedruckt (Flachdruck). Der Druck wurde 2 Minuten bei 80°C fixiert.

### Bürstwäsche-Test

Die Fixierung von Färbungen kann mit Hilfe des Bürstwäsche-Testes erfolgen. Der Abrieb kann als Maß für den Vernetzungsgrad des Bindemittels dienen.

Eine Probe (ca. 10 x 20 cm) des gefärbten Gewebes wird nach dem Fixieren mit einer Mischung aus
2,5 g/l Marseille-Seife ("grüne Seife"),
2 g/l wasserfreier Soda und
2 g/l Sequestierhilfsmittel
bei 80°C ca. 10 Minuten lang imprägniert, dann gereckt und mit einer harten Perlon-Handbürste mit konstantem Druck (1 kg) gebürstet. Normalerweise macht man 50 Doppelstriche.

Danach wird die Probe gespült und getrocknet. Der Pigmentabrieb der gebürsteten Probe wird mit der ungebürsteten Originalprobe verglichen. Ist kein Pigmentabrieb erkennbar; kann das Bindemittel als voll vernetzt betrachtet werden.

### Beispiel 1

Vergleich 1 wurde mit der Änderung wiederholt, daß anstelle des Melamin/Formaldehyd-Kondensats 8 g des Polyisocyanats 1 eingesetzt wurden. Druck und Fixierung erfolgten wie im Vergleich 1.

Die Drucke von Vergleich 1 und Beispiel 1 wurden im Bürstwäsche-Test mit folgenden Ergebnissen geprüft:

| Vergleich 1 | Beispiel 1 |
|---|---|
| starke Beschädigungen auf beiden Substraten | ganz leichte, eben bemerkbare Beschädigungen auf beiden Substraten |

### Beispiel 2: Druck aus wäßriger Dispersion Binder/Verdicker-Mischung:

In 802 g Wasser wurden 5 g Emulgator VA, 4 g Emulgator WN, 25 g Acrylsäure/Acrylamid-Copolymerisat (in Form der 29 %igen Dispersion), 114 g Acrylatbinder und 50 g Ruß eingetragen. Die Mischung wurde unter Verwendung der in der nachfolgenden Tabelle aufgelisteten Vernetzer zu Farbpasten verarbeitet.

| | 1 | 2 | 3 |
|---|---|---|---|
| Binder-Verdicker Mischung (wie oben beschrieben) | 995 g | 990 g | 985 g |
| | | | |
| A) Melamin-Formaldehyd-Kondensat | 5 g | 10 g | 15 g |
| | | | |
| B) Polyisocyanat 2 | 5 g | 10 g | 15 g |
| | | | |
| C) Polyisocyanat 3, 80 %ig in Propylenglykoldiacetat | 5 g | 10 g | 15 g |
| | | | |
| D) Polyisocyanat 4 | 5 g | 10 g | 15 g |

Die Druckpasten wurden auf mercerisierte und auch auf gebleichte Baumwollgewebe gedruckt. Die Drucke wurden (i) an der Luft fixiert (einfach durch Trocknen lassen), (ii) 5 Minuten bei 80°C und (iii) 5 Minuten bei 80° und weitere 5 Minuten bei 150°C. An Echtheiten wurden die Bürstwäsche (50 x) sofort nach der Fixierung, 3 Tage später sowie 1 Woche später durchgeführt. Zur Beurteilung der Druckpastenstabilität wurden mit den gleichen Druckpasten 1 Tag nach Ansatz der Pasten und 3 Tage nach Ansatz der Pasten Druckversuche gemacht.

Sofern die Drucke nur an Luft durch Verdampfen des Wassers "fixiert" wurden, ist das unter C) eingesetzte Polyisocyanat am günstigsten, was die Echtheiten der Drucke anbelangt. Der Druckansatz ist allerdings nach 24 Stunden Lagern nicht mehr zu diesen guten Echtheiten fixierbar. Falls man allerdings neuen Vernetzer zusetzt, erhält man wieder die originalen Echtheiten. Der Versuch D liefert bei Lufttrocknung erst nach 2 Tagen gleich gute Ergebnisse. Die Trocknung bei 80°C bringt aber auch diesen Vernetzer gleich rasch auf das hohe Echtheitsniveau wie C. A ist als Vernetzer bis 80°C unwirksam. Erst bei 150°C zeigt auch A die bekannten guten Echtheiten.

Die Mengen von 10 bzw. 15 g Vernetzer machen sich nicht in einer wesentlichen Erhöhung des Echtheitsniveaus bemerkbar; 5 g Vernetzer sind bereits für die erzielbaren Echtheiten ausreichend.

### Beispiel 3

Die Druckpasten des Beispiels 2 A-C wurden nach dem Rotations-Filmdruck-Verfahren auf gewebte und auch gewirkte Textilien aus Baumwolle aufgebracht. Analog zu Beispiel 2 wurden die Drucke fixiert. Man erhielt Drucke mit guten Gebrauchseigenschaften und gutem Griff; die Fixierbedingungen machten sich in gleicher Weise bemerkbar wie in Beispiel 2.

### Beispiel 4

Anstelle des Acrylatbinders des Beispiels 2 wurden 120 g Polyurethan-Binder eingesetzt. In diesem Beispiel wurde darauf verzichtet, ein Pigment einzusetzen. Mit der Druckpaste wurde eine leichte Baumwolle hoher Qualität bedruckt und als Vernetzer wurden auf 990 g dieser Bindermischung 10 g Polyisocyanat 1 als Vernetzer gewählt. Das bedruckte Textil wurde sodann im Fade-O-Meter belichtet. Prüfung auf Vergilbungsfähigkeit und auf Naßbürstwäsche waren erfolgreich.

## Patentansprüche

1. Verwendung von
I. Polyisocyanatgemischen mit
a) einer mittleren NCO-Funktionalität von 1,8 bis 4,2,
b) einem Gehalt an (cyclo)aliphatisch gebundenen Isocyanatgruppen (berechnet als NCO, Molekulargewicht = 42) von 12,0 bis 21,5 Gew.-% und gegebenenfalls
c) einem Gehalt an innerhalb von Polyetherketten angeordneten Ethylenoxideinheiten (berechnet als C₂H₄O, Molekulargewicht = 44) von 2 bis 20 Gew.-%, wobei die Polyetherketten im statistischen Mittel von 5 bis 70 Ethylenoxideinheiten aufweisen,
als Vernetzer für in Textildruckpasten verwendete Bindemittel.

## Claims

1. Use of
I. Polyisocyanate mixtures having
a) an average NCO functionality of 1.8 to 4.2,
b) a content of (cyclo)aliphatically bonded isocyanate groups (calculated as NCO, molecular weight = 42) of 12.0 to 21.5% by weight, and if appropriate
c) a content of ethylene oxide units (calculated as C₂H₄O, molecular weight = 44) arranged within polyether chains of 2 to 20% by weight, the polyether chains containing a statistical average of 5 to 70 ethylene oxide units,
as crosslinking agents for binders used in textile printing pastes.

## Revendications

1. Utilisation de
I. des mélanges de polyisocyanates ayant
a) une fonctionnalité moyenne en NCO de 1,8 à 4,2,
b) une teneur en groupes isocyanate à liaisons (cyclo)aliphatiques (exprimée en NCO, poids équivalent 42) de 12,0 à 21,5 % en poids et le cas échéant
c) une teneur en motifs d'oxyde d'éthylène disposés à l'intérieur de chaînes de polyéther (exprimée en C₂H₄O, poids équivalent 44) de 2 à 20 % en poids, les chaînes de polyéther contenant en moyenne statistique de 5 à 70 motifs oxyde d'éthylène,
en tant qu'agents réticulants pour des liants utilisés eux-mêmes dans des pâtes d'impression textiles.
